# EUROPÄISCHE PATENTSCHRIFT

(11) **EP 2 368 422 B1**
(45) Veröffentlichungstag und Bekanntmachung des Hinweises auf die Patenterteilung: **21.10.2015**
(21) Anmeldenummer: 11450014.3
(22) Anmeldetag: 31.01.2011
(51) Int. Cl.: A01G 13/00

(54) **Pflanzenschutzvorrichtung**
Plant protection device
Dispositif de protection de plantes

(30) Priorität: 22.03.2010 AT 18210 U
(43) Veröffentlichungstag der Anmeldung: 28.09.2011
(73) Patentinhaber: Witasek, Peter, 9560 Feldkirchen (AT)
(72) Erfinder: Witasek, Peter, 9560 Feldkirchen (AT)
(74) Vertreter: Beer & Partner Patentanwälte KG

(56) Entgegenhaltungen:
- EP-A1- 0 173 046
- EP-A1- 2 070 407
- WO-A2-2009/120704
- DE-A1- 2 231 875
- GB-A- 2 258 797
- GB-A- 2 442 333
- US-A- 5 471 783

## Beschreibung

Die Erfindung betrifft eine Pflanzenschutzvorrichtung (Pflanzenschutzhülle oder Pflanzenschutzsäule), insbesondere eine Baum- oder Rebschutzhülle mit den Merkmalen des einleitenden Teils von Anspruch 1 (GB 2 443 333 A).

Pflanzenschutzhüllen (auch "Rebschutzsäulen" genannt) sind bekannt, in welchem Zusammenhang auf die GB 2 442 333 A, die WO 2009/120704 A2, die AT 005 520 U1, die FR 2 356 361 A und die DE 2 231 875 A verwiesen wird.

Derartige Pflanzenschutzvorrichtungen haben sich an sich gut bewährt, da sie vor allem junge Pflanzen vor dem Verbiss durch Tiere und vor der Einwirkung von Herbiziden schützen.

Problematisch bei den bekannten Pflanzenschutzvorrichtungen ist es, dass diese für den Gebrauch aus einem im Wesentlichen flachen Zuschnitt zu dem rohrförmigen Körper gebogen und längs ihrer Ränder miteinander verbunden werden müssen.

Die GB 2 442 333 A offenbart eine Pflanzenschutzvorrichtung mit einem über eine zu schützende Pflanze anzuordnenden, rohrförmigen Körper, wobei der rohrförmige Körper die Form eines Mantels eines Prisma aufweist und im Bereich von einem Ende des Körpers wenigstens ein mit Durchbrechungen versehener Bereich vorgesehen ist.

Der Erfindung liegt die Aufgabe zugrunde, eine Pflanzenschutzvorrichtung der eingangs genannten Gattung vorzustellen, welche die geschilderten Nachteile nicht aufweist und dennoch die Funktion einer Pflanzenschutzvorrichtung (Pflanzenschutzhülle, Rebschutzsäule) erfüllt.

Gelöst wird diese Aufgabe erfindungsgemäß mit einer Pflanzenschutzvorrichtung, welche die Merkmale von Anspruch 1 aufweist.

Bevorzugte und vorteilhafte Ausführungen der erfindungsgemäßen Pflanzenschutzvorrichtung sind Gegenstand der Unteransprüche.

Da die erfindungsgemäße Pflanzenschutzvorrichtung einen rohrförmigen Körper aufweist, der die Form des Mantels eines Prismas, insbesondere eines Zylinders, beispielsweise annähernd die Form eines Kreiszylinders, aufweist, genügt es, die erfindungsgemäße Pflanzenschutzvorrichtung über die zu schützende Pflanze zu stecken, so dass der gewünschte Schutz gegeben ist.

Vorteilhaft bei der Erfindung ist es, dass die erfindungsgemäße Pflanzenschutzvorrichtung im Bereich eines Endes des rohrförmigen Körpers Durchbrechungen aufweist. So ergibt der in Gebrauchslage untere geschlossene Teil der Pflanzenschutzvorrichtung vorteilhaften Schutz gegenüber Herbiziden und auch Schutz der Pflanze bei mechanischer Unkrautbekämpfung, wogegen der obere mit Durchbrechungen versehene Bereich dazu dient, die Pflanze an die Umgebung anzupassen, wenn sie während ihres Wachstums diesen Bereich erreicht. So kann sich die Pflanze bildlich gesprochen an die raue Wirklichkeit gewöhnen und anpassen während sie wächst. Der mit Durchbrechungen versehene Bereich der erfindungsgemäßen Pflanzenschutzhülle, der in der Gebrauchslage im Bereich des oberen Endes des rohrförmigen Körpers vorgesehen ist, hilft also der Pflanze, sich auf die raue Wirklichkeit vorzubereiten und stellt quasi eine "Abhärtungszone" dar.

Vorteilhaft in einer Ausführungsform der erfindungsgemäßen Pflanzenschutzhülle ist es, dass diese flach zusammengelegt transportiert werden kann und erst bei Gebrauch in die gewünschte Form, im Wesentlichen die Form eines Prismas, insbesondere eines vierseitigen Prismas mit abgerundeten Kanten oder eines Zylinders mit kreis- oder ovalförmiger Grundfläche, gebracht wird.

Vorteilhaft bei der erfindungsgemäßen Pflanzenschutzvorrichtung ist es, dass diese schnell aufgestellt und im Bereich einer (jungen) Pflanze angebracht werden kann, da sie einen in sich geschlossenen Körper aufweist, so dass es genügt, diese aus der flach zusammengedrückten Form, in der sie geliefert und gelagert wird, in die offene Form zu verformen, in dem sie einfach aus der flachen Transportstellung in die Gebrauchsstellung aufgeweitet wird.

Bei der Pflanzenschutzvorrichtung der Erfindung ist vorgesehen, dass an der Innenseite der Wand des rohrförmigen Körpers, Rippen und Nuten, die in Längsrichtung (achsparallel) verlaufen, vorgesehen sind. Die längslaufenden, d.h. achsparallele Rippen an der Innenseite und an der Außenseite der Wand der Pflanzenschutzvorrichtung sind rippenartige Verdickungen der Wand.

Durch die Rippen und die Nuten, die zwischen den Rippen vorliegen, ergibt sich der Vorteil, dass eine hohe Längsstabilität und eine Formerhaltung gegeben ist.

Die erfindungsgemäße Pflanzenschutzvorrichtung kann aus einem Werkstoff bestehen, der gute Lichtdurchlässigkeit hat und so das für das Wachstum wichtige Sonnenlicht durchlässt und wuchskräftige Pflanzen garantiert. Beispielsweise ist ein solcher Werkstoff eine Folie aus für Sonnenlicht durchlässigem Kunststoff.

Weitere Einzelheiten und Merkmale der Erfindung ergeben sich aus der nachstehenden Beschreibung eines bevorzugten Ausführungsbeispiels anhand der Zeichnungen. Es zeigt:

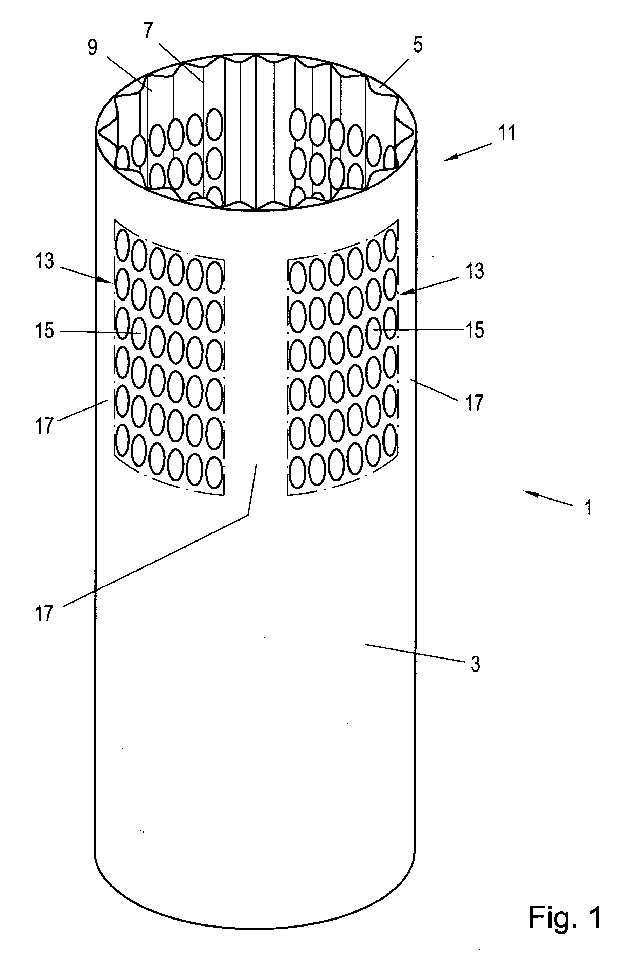

- Fig. 1: in Ansicht ein Ausführungsbeispiel einer erfindungsgemäßen Pflanzenschutzvorrichtung,
- Fig. 2: in vergrößertem Maßstab einen Schnitt durch die Wand des hohlraumförmigen Körpers der Pflanzenschutzvorrichtung und
- Fig. 3: eine andere Ausführungsform der Wand.

Eine Pflanzenschutzvorrichtung 1, die im gezeigten Ausführungsbeispiel als Pflanzenschutzsäule ausgebildet ist, besitzt einen rohrförmigen Körper 3, der im gezeigten Ausführungsbeispiel die Form des Mantels eines Kreiszylinders hat. In der Praxis wird der Körper 3 freilich nicht genau die Form des Mantels eines Kreiszylinders haben. Vielmehr wird der Körper 3 beispielsweise die Form eines vierseitigen Prismas mit abgerundeten Längskanten haben.

In Praxis können für die erfindungsgemäße Pflanzenschutzvorrichtung rohrförmige Körper 3 verwendet werden, die Längen von 40, 60, 80, 100 und 120 cm aufweisen und beispielsweise einen Innendurchmesser (Wuchsraumdurchmesser) von 10 cm besitzen. Diese Maßangaben sind lediglich Beispiele, da jede(r) andere Länge und/oder Durchmesser des rohrförmigen Körpers 3 einer erfindungsgemäßen Pflanzenschutzvorrichtung 1 möglich ist.

Die Wand 5 des rohrförmigen Körpers 3, die also dem Mantel eines Prismas, im gezeigten Beispiel eines (Kreis-)Zylinders, entspricht, besitzt an ihrer Innenseite längslaufende (achsparallele) Rippen 7 und zwischen diesen angeordnete Nuten 9.

In dem in der Gebrauchslage oberen Endbereich 11 des rohrförmigen Körpers 3 sind Bereiche 13 vorgesehen, in welchen Durchbrechungen 15 (Löcher) vorgesehen sind. Im gezeigten Ausführungsbeispiel sind die Durchbrechungen 15 länglich ovale Löcher, deren längere Abmessung parallel zur Richtung der Länge (Achse) des rohrförmigen Körpers 3 verläuft.

Im gezeigten Ausführungsbeispiel ist weiters vorgesehen, dass die Bereiche 13 mit Durchbrechungen 15 durch Streifen 17, in denen keine Durchbrechungen 15 vorgesehen sind, unterteilt sind, sodass über den Umfang des rohrförmigen Körpers 3.mehrere Bereiche 13, beispielsweise vier Bereiche 13 mit Durchbrechungen 15 vorgesehen sind, die jeweils voneinander durch unterbrechungsfreie (lochfreie, geschlossene) Streifen 17 voneinander getrennt sind. Die unterbrechungsfreien Streifen 17 sind, wenn der Körper 3 die Form eines (vierseitigen) Prismas hat, insbesondere im Bereich der Längskanten des Körpers 3 vorgesehen, wogegen die Bereiche 13 mit Durchbrechungen 15 im Bereich der Seitenflächen des prismatischen Körpers 3 angeordnet sind.

In einer bevorzugten Ausführungsform sind die Durchbrechungen 15 in mehreren Radialebenen (zur Länge/Achse des Körpers 3 normale Ebenen) angeordnet.

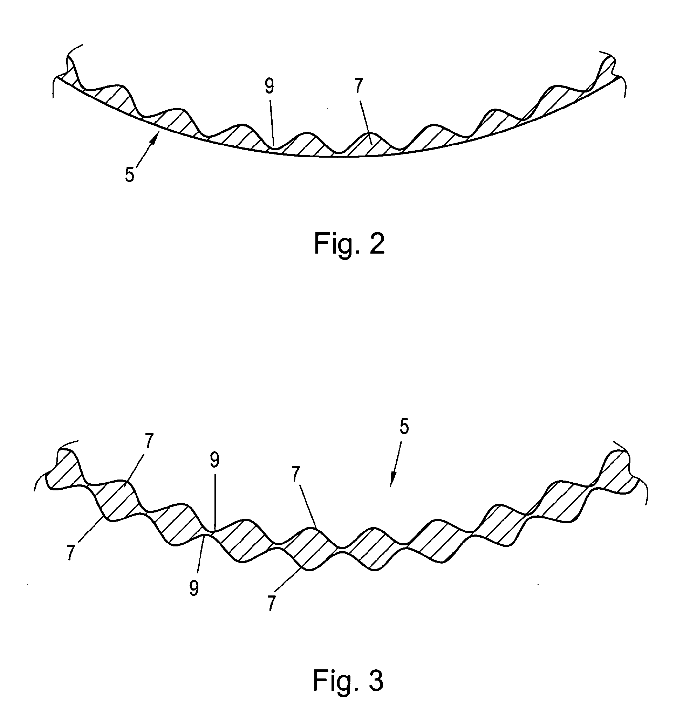

Die Wand 5 des Körpers 3 der erfindungsgemäßen Pflanzenschutzvorrichtung 1 kann beispielsweise eine Kunststofffolie sein, für die eine Querschnittsform beispielhaft in Fig. 2 gezeigt ist. Bei dieser Ausführungsform werden die Rippen 7 durch bereichsweise Verdickungen der die Wand 5 bildenden Folie gebildet, wogegen die Nuten 9 durch dünnere Bereiche der Wand 5 gebildet sind. Im gezeigten Ausführungsbeispiel sind solche Rippen 7 und Nuten 9 lediglich an der Innenseite des Körpers 3 der erfindungsgemäßen Pflanzenschutzvorrichtung 1 vorgesehen. Es ist aber auch eine Ausführungsform in Betracht gezogen, bei der auch die Außenseite des Körpers 3 nicht vollständig glatt, sondern beispielsweise im Bereich der nach innen weisenden Rippen 7, diesen gegenüberliegende, nach außen weisende (flache) Rippen 7 aufweist, wie dies in Fig. 3 schematisch dargestellt ist.

Bezüglich der Fig. 2 und der Fig. 3 ist noch festzuhalten, dass die Form der Rippen 7 und der Nuten 9 an der Innenseite und an der Außenseite identisch oder unterschiedlich sein kann. Beispielsweise sind die Rippen 7 an der Außenseite der Pflanzenschutzvorrichtung 1 flacher als die Rippen 7 an der Innenseite.

Zusammenfassend kann ein Ausführungsbeispiel der Erfindung wie folgt beschrieben werden:
Eine Pflanzenschutzvorrichtung 1 besitzt einen über eine zu schützende Pflanze anzuordnenden, rohrförmigen Körper 3. Der rohrförmige Körper 3 ist ein in sich geschlossener Zylinder, der im Bereich von seinem in Gebrauchslage oberen Ende mehrere Durchbrechungen 15 aufweist, wogegen er in seinem in Gebrauchslage unten liegenden Bereich geschlossen ist, so dass die innerhalb des rohrförmigen Körpers 3 angeordnete Pflanze bei Unkrautbekämpfung durch mechanisches Bearbeiten (jäten) und/oder Anwenden von Herbiziden nicht gefährdet ist. Die Wand 5 des rohrförmigen Körpers 3 besitzt an ihrer Innenseite, und gegebenenfalls auch an der Außenseite, vorspringende Rippen 7 und dazwischen angeordnete Nuten 9, wobei die Rippen 7 und die Nuten 9 in Längsrichtung (achsparallel) verlaufend ausgerichtet sind und dem Körper 3 der Pflanzenschutzvorrichtung 1 ungeachtet des Umstandes, dass er flach zusammengelegt werden kann, in der Gebrauchsstellung die nötige Stabilität geben.

## Patentansprüche

1. Pflanzenschutzvorrichtung (1) mit einem über einer zu schützenden Pflanze anzuordnenden, rohrförmigen Körper (3), wobei der rohrförmige Körper (3) die Form eines Mantels eines Prisma aufweist und im Bereich von einem Ende (11) des Körpers (3) wenigstens ein mit Durchbrechungen (15) versehener Bereich vorgesehen ist, wobei die Durchbrechungen (15) länglich ovale Löcher sind, deren längere Abmessung parallel zur Richtung der Länge (Achse) des rohrförmigen Körpers (3) verläuft, wobei zwischen Durchbrechungen (15) aufweisenden Bereichen (13) von Durchbrechungen (15) freie Streifen (17) vorgesehen sind, wobei die Streifen (17), die von Unterbrechungen (15) frei sind, über den Umfang des rohrförmigen Körpers (3) gleichmäßig verteilt sind und sich in Richtung der Längserstreckung des rohrförmigen Körpers (3) erstrecken, und wobei der Körper (3) aus einer Folie aus Kunststoff besteht, **dadurch gekennzeichnet, dass** der Körper (3) an seiner Innenseite und an seiner Außenseite längslaufende Rippen (7) und zwischen diesen Rippen (7) Nuten (9) aufweist, dass die Rippen (7) durch bereichsweise Verdickungen der die Wand (5) des Körpers (3) bildenden Folie und die Nuten (9) durch dünnere Bereiche der die Wand (5) des Körpers (3) bildenden Folie gebildet sind, dass über den Umfang des rohrförmigen Körpers (3) mehrere Bereiche (13) vorgesehen sind, in welchen in Umfangsrichtung des rohrförmigen Körpers (3) mehrere Durchbrechungen (15) nebeneinander vorgesehen sind, und dass zwischen Durchbrechungen (15) aufweisenden Bereichen (13) von Durchbrechungen (15) freie Streifen (17) vorgesehen sind, in welchen in Umfangsrichtung des rohrförmigen Körpers (3) Rippen (7) ohne eine dazwischen angeordnete Durchbrechung (15) vorgesehen sind.

2. Vorrichtung nach Anspruch 1, **dadurch gekennzeichnet, dass** der Körper (3) in sich geschlossen ist.

3. Vorrichtung nach Anspruch 1 oder 2, **dadurch gekennzeichnet, dass** der Körper (3) die Form des Mantels eines vierseitigen Prismas mit abgerundeten Kanten oder eines Zylinders, insbesondere eines Kreiszylinders, aufweist.

4. Vorrichtung nach einem der Ansprüche 1 bis 3, **dadurch gekennzeichnet, dass** die Rippen (7) in den Innenraum des rohrförmigen Körpers (3) vorstehen.

5. Vorrichtung nach einem der Ansprüche 1 bis 4, **dadurch gekennzeichnet, dass** die Rippen (7) an der Außenseite eine von der Form der Rippen (7) an der Innenseite abweichende Form aufweisen.

6. Vorrichtung nach Anspruch 5, **dadurch gekennzeichnet, dass** die Rippen (7) an der Außenseite flacher sind als die Rippen (7) an der Innenseite des Körpers (3).

7. Vorrichtung nach einem der Ansprüche 1 bis 6, **dadurch gekennzeichnet, dass** der wenigstens eine Durchbrechungen (15) aufweisende Bereich (13) von einem Ende des rohrförmigen Körpers (3) Abstand aufweist.

8. Vorrichtung nach einem der Ansprüche 1 bis 7, **dadurch gekennzeichnet, dass** die Durchbrechungen (15) in mehreren in zur Längserstreckung des Körpers (3) normalen Ebenen liegenden Ringen angeordnet sind.

## Claims

1. Plant protection device (1) with a tubular body (3) to be arranged over a plant to be protected, wherein the tubular body (3) has the shape of an envelope of a prism and at least one region with openings (15) is provided in the region of one end (11) of the body (3), wherein the openings (15) consist of oblong oval holes, the longer dimension of which extends parallel to the longitudinal direction (axis) of the tubular body (3), wherein strips (17), which are free of openings (15), are provided between regions (13) having openings (15), wherein the strips (17), which are free of openings (15), are uniformly distributed over the circumference of the tubular body (3) and extend in the longitudinal direction of the tubular body (3), and wherein the body (3) consists of a plastic sheet, **characterized in that** the body (3) on its inner side and on its outer side has longitudinally extending ribs (7) and grooves (9) between these ribs (7), **in that** the ribs (7) are formed by enlargements in certain areas of the sheet forming the wall (5) of the body (3) and the grooves (9) are formed by thinner regions of the sheet forming the wall (5) of the body (3), **in that** several regions (13), in which several openings (15) are adjacently arranged in the circumferential direction of the tubular body (3), are provided over the circumference of the tubular body (3), and **in that** strips (17), which are free of openings (15) and in which ribs (7) without an opening (15) arranged in between are provided in the circumferential direction of the tubular body (3), are provided between regions (13) featuring openings (15).

2. Device according to claim 1, **characterized in that** the body (3) is self-contained.

3. Device according to claim 1 or 2, **characterized in that** the body (3) has the shape of the envelope of a four-sided prism with rounded corners or of a cylinder, particularly a circular cylinder.

4. Device according to one of claims 1 to 3, **characterized in that** the ribs (7) protrude into the interior of the tubular body (3).

5. Device according to one of claims 1 to 4, **characterized in that** the ribs (7) on the outer side have a shape that differs from the shape of the ribs (7) on the inner side.

6. Device according to claim 5, **characterized in that** the ribs (7) on the outer side are flatter than the ribs (7) on the inner side of the body (3).

7. Device according to one of claims 1 to 6, **characterized in that** the at least one region (13) having openings (15) is spaced apart from one end of the tubular body (3).

8. Device according to one of claims 1 to 7, **characterized in that** the openings (15) are arranged in several rings that lie in planes extending normal to the longitudinal direction of the body (3).

## Revendications

1. Dispositif de protection de plantes (1), avec un corps (3) tubulaire destiné à être placé sur une plante à protéger, le corps (3) tubulaire présentant la forme d'une enveloppe d'un prisme et dans la région de l'extrémité (11) du corps (3) étant prévue au moins une région dotée de jours (15), les jours (15) étant des trous ovales allongés, dont la dimension la plus longue s'étend à la parallèle de la direction de la longueur (l'axe) du corps (3) tubulaire, entre des régions (13) comportant des jours (15) étant prévues des bandes (17) exemptes de jours (15), les bandes (17) qui sont exemptes de jours (15) étant distribuées régulièrement sur la périphérie du corps (3) tubulaire et s'étendant en direction de l'extension longitudinale du corps (3) tubulaire et le corps (3) étant constitué d'un film en matière plastique, **caractérisé en ce que** sur sa face intérieure et sur sa face extérieure, le corps (3) comporte des nervures (7) longitudinales et entre les nervures (7), des rainures (9), **en ce que** lesdites nervures (7) sont formées par des épaississements par zones du film formant la paroi (5) du corps (3) et les rainures (9) sont formées par des zones plus minces du film formant la paroi (5) du corps (3), **en ce que** sur la périphérie du corps (3) tubulaire sont prévues plusieurs régions (13), dans lesquelles dans la direction périphérique du corps (3) tubulaire, plusieurs jours (15) sont prévus côte à côte (15) et **en ce qu'**entre des régions (13) comportant les jours (15) sont prévues des bandes (17) exemptes de jours (15), dans lesquelles, dans la direction périphérique du corps (3) tubulaire sont prévues des nervures (7) sans un jour (5) placé entre elles.

2. Dispositif selon la revendication 1, **caractérisé en ce que** le corps (3) est fermé sur soi.

3. Dispositif selon la revendication 1 ou 2, **caractérisé en ce que** le corps (3) présente la forme de l'enveloppe d'un prisme quadrilatéral à arêtes arrondies ou d'un cylindre, notamment d'un cylindre circulaire.

4. Dispositif selon l'une quelconque des revendications 1 à 3, **caractérisé en ce que** les nervures (7) débordent dans l'espace intérieur du corps (3) tubulaire.

5. Dispositif selon l'une quelconque des revendications 1 à 4, **caractérisé en ce que** les nervures (7) sur la face extérieure présentent une forme différente de celle des nervures (7) sur la face intérieure.

6. Dispositif selon la revendication 5, **caractérisé en ce que** les nervures (7) sur la face extérieure sont plus plates que le nervures (7) sur la face intérieure du corps (3).

7. Dispositif selon l'une quelconque des revendications 1 à 6, **caractérisé en ce que** l'au moins une région (13) comportant des jours (15) présente un écart par rapport à l'extrémité du corps (3) tubulaire.

8. Dispositif selon l'une quelconque des revendications 1 à 7, **caractérisé en ce que** les jours (15) sont placés dans plusieurs anneaux situés dans un plan normal par rapport à l'extension longitudinale du corps (3).
